# EUROPÄISCHE PATENTANMELDUNG

(11) **EP 0 765 102 A2**
(43) Veröffentlichungstag der Anmeldung: **26.03.1997**
(21) Anmeldenummer: 96116235.1
(22) Anmeldetag: 07.05.1992
(51) Int. Cl.: H04Q 11/04

(54) **Verfahren zur Bitratenadaption**

(30) Priorität: 13.05.1991 CH 1418/91; 10.07.1991 CH 2047/91; 21.08.1991 CH 2453/91
(62) Teilanmeldung aus: 92909088.4
(71) Anmelder: Siemens Schweiz AG, 8047 Zürich (CH)
(72) Erfinder: Skalsky, Peter, 8048 Zürich (CH)

(57) **Zusammenfassung**

Die Erfindung betrifft ein Verfahren zur Bitratenadaption eines Datenstroms, über den Steuer- und/oder Nutzdaten zwischen mindestens zwei Datensende- und Empfangseinrichtungen übertragen werden. Der Datenstrom wird dabei in mindestens einem durch die Wortlänge einer Recheneinheit vorgegebenen Datensatz aufgeteilt, wobei die Nutzinformation aus dem Datensatz extrahiert wird. Die Bitratenadaption kann insbesondere nach einem in der CCITT-Empfehlung V.110 vorgegebenen zweistufigen Verfahren in einer ersten (RA1) und einer zweiten Bitratenadaption (RA2) über eine Zwischenübertragungsrate (ZUR) vorgenommen werden.

## Beschreibung

Die vorliegende Erfindung betrifft ein Verfahren nach dem Oberbegriff des Patentanspruchs 1.

Beim Integrated Services Digital Network (ISDN) sind grundsätzlich zwei verschiedene Teilnehmeranschlussarten vorgesehen: der Basisanschluss und der Primärratenanschluss. Der Primärratenanschluss kann seinerseits in die sogenannten Kanal-Strukturen weiter unterteilt werden. Man unterscheidet zwischen einer H1-Kanal-Struktur, einer H0-Kanal-Struktur, einer B-Kanal-Struktur und einer gemischten Struktur, wobei in der letztgenannten eine Kombination zwischen B- und H0-Kanälen gewählt werden kann. Während die übertragenen Daten der einzelnen B-, H0- und H1- Kanäle für die Vermittlung über das Fernmeldenetz keine Bedeutung haben (bit-transparente Übertragung), wird ein Signalisierungskanal (D- Kanal) für den Auf- und Abbau der Verbindungen innerhalb des Fernmeldenetzes benötigt. Bei Anschlüssen von ISDN-Teilnehmern an Rechnersysteme wurde bis anhin vom Basisanschluss oder allenfalls vom Primärratenanschluss mit H1-Kanal-Struktur ausgegangen. Die Anschlussart über den Basisanschluss, die eine maximale Übertragungsrate von 144 kBit/s zulässt, kann mit einem relativ bescheidenen schaltungstechnischen Aufwand pro Anschlusseinheit realisiert werden. Der Nachteil besteht jedoch in der kleinen Anzahl von Teilnehmeranschlüssen pro Anschlusseinheit, da beim Basisanschluss lediglich zwei B-Kanäle und ein D-Kanal vorgesehen sind. Werden zum Beispiel gleichzeitig 30 Teilnehmeranschlüsse benötigt, so müssen 15 Anschlusseinheiten zur Verfügung gestellt werden. Dieser grosse schaltungstechnische Aufwand erhöht einerseits die Kosten und den Wartungsaufwand, anderseits vermindert er die Zuverlässigkeit des Gesamtsystems. Die Anschlussart über den Primärratenanschluss in H1-Kanal-Struktur lässt wohl die vorgesehene Übertragungsrate von 2 MBit/s zu, ist aber lediglich für die Kommunikation zwischen zwei ISDN-Teilnehmern einsetzbar, d.h. die Übertragung erfolgt im Fernmeldenetz auf der ganzen Kanalbandbreite des Primärratenanschlusses bit-transparent. Bei der Verarbeitung eines Primärratenanschlusses in B-Kanal-Struktur, welcher gemäss CCITT I-431 dem Anwender 30 B-Kanäle (Basiskanäle) und einen D-Kanal (Hilfskanal) à 64 kBit/s zur Verfügung stellt, wird somit gleichzeitig 30 verschiedenen Teilnehmern der Zugriff auf einen Rechner ermöglicht.

Will ein Teilnehmer mit einem mit einer V.24/V.28 Schnittstelle ausgerüsteten Endgerät Daten über das digitale Fernmeldenetz übertragen, so müssen die vom Endgerät zu übertragenden Daten in einen gemäss CCITT-Empfehlung I.460 und I.463 vorgegebenen Datenstrom mit 64 kBit/s Übertragungsrate eingebettet werden. Zur gleichzeitigen Verarbeitung von mehreren 64 kBit/s Datenströmen, müssen entsprechende leistungsfähige Bitratenadaptionsalgorithmen vorhanden sein, damit die relevanten Daten ohne Verzögerung extrahiert und ohne die Übertragung zu blockieren, weiterverarbeitet werden können. Dies ist insbesondere bei der Verarbeitung eines Primärratenanschlusses von grosser Bedeutung.

Der vorliegenden Erfindung liegt daher die Aufgabe zugrunde, ein Verfahren zur Bitratenadaption anzugeben, das den Datenaustausch zwischen mindestens zwei mit unterschiedlichen Übertragungsraten operierenden Einheiten bzw. Netzen ermöglicht.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Die Erfindung weist folgende Vorteile auf: Eine grosse Anzahl kostengünstiger Endgeräte kann gleichzeitig über das bestehende private oder öffentliche Fernmeldenetz an eine zentrale Computeranlage angeschlossen werden. Dies ist nicht nur bei kleineren Teilnehmervermittlungsanlagen in privaten Netzen - wie zum Beispiel in Unternehmen - vorteilhaft, sondern lässt sich auch über das öffentliche Fernmeldenetz ohne besonderen Aufwand realisieren. Auf die Installation einer teuren firmenweiten LAN-Verkabelung (Local Area Network) kann verzichtet werden und an deren Stelle können die vorhandenen Leitungen von privaten oder öffentlichen Netzen für die Kommunikation einzelner Endgeräte mit einem Rechner verwendet werden. Dank der softwaremässigen Realisierung der Bitratenadaption kann die benötigte Hardware auf allgemeine flexible Funktionen reduziert werden.

Durch die Bitratenadaption wird eine eigentliche Geschwindigkeitsanpassung der Netto-Bitrate der Endgeräte an die Bitrate des Fernmeldenetzes durch Hinzufügen von Zusatz- und Füllinformationen vorgenommen. Die Geschwindigkeitsanpassung kann dabei sowohl in der Anpassung einer höheren an eine tiefere Bitrate oder umgekehrt erfolgen. Insbesondere eignet sich der erfindungsgemässe Bitratenadaptionsalgorithmus auch zur Realisierung der durch die CCITT-Empfehlung I.460 und I.463 (V.110) vorgegebenen Angaben. Eine softwaremässige Implementation des Algorithmus wirkt sich in dessen Wartungsfreundlichkeit besonders positiv aus, denn neue Anforderungen an den Algorithmus können dadurch schneller realisiert werden.

Die Erfindung wird nachfolgend anhand von Zeichnungen beispielsweise näher erläutert. Dabei zeigt:
- Fig. 1: eine mögliche Unterteilung des Verfahrens zur Bitratenadaption in zwei Stufen,
- Fig. 2: einen pro Teilnehmerkanal vorgegebenen Datenstrom, der durch das Verfahren verarbeitet wird,
- Fig. 3: zwei Datensätze, in die der Datenstrom fortlaufend abwechslungsweise abgelegt wird,
- Fig. 4: einen Datensatz in verschiedenen Verarbeitungsphasen der in der zweiten Stufe ablaufenden Bitratenadaption,
- Fig. 5: ein Datenwort einer Dateneinheit mit zwei Suchfenstern für die Synchronisation des Datenstromes mit den Verarbeitungsphasen einer Recheneinheit,
- Fig. 6: eine Darstellung des Datenstromes vor der ersten Stufe der Bitratenadaption während mehreren Verarbeitungstakten,
- Fig. 7: eine Dateneinheit in verschiedenen Phasen eines Verabeitungstaktes bei der Vorbereitung zur Datenextraktion und
- Fig. 8: eine Dateneinheit zusammen mit einem Extraktionswort in verschiedenen Phasen des Verarbeitungstaktes während der Datenextraktion.

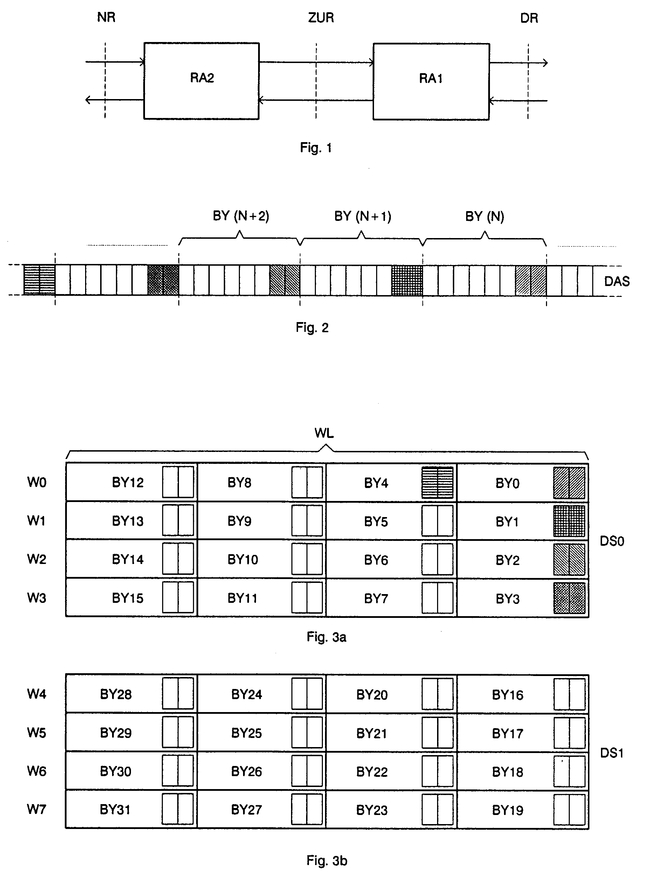

Fig. 1 zeigt eine mögliche Realisierung des erfindungsgemässen Verfahrens zur Bitratenadaption in zwei Bitratenadaptionsstufen RA1 und RA2. Die erste Bitratenadaptionsstufe RA1 passt eine auf der Seite der Endgeräte vorkommende Datenrate DR an eine Zwischenübertragungsrate ZUR an, welche von einer zweiten Bitratenadaptionsstufe RA2 an eine einem Fernmeldenetz entsprechende Netzrate NR angeglichen wird. Gleichzeitig erfolgt auch eine Bitratenadaption in umgekehrter Richtung, nämlich von der Netzrate NR über die zweite Bitratenadaptionsstufe RA2 zur Zwischenübertragungsrate ZUR und schliesslich über die erste Bitratenadaption RA1 zur Datenrate DR. Im vorliegenden Ausführungsbeispiel wird ein auf dem ISDN-Standard basierender B-Kanal an ein mit einer V.24/V.28 Schnittstelle ausgerüstetes Endgerät mit den folgenden Parametern angeschlossen: 1 Stopbit, 7 Datenbit, Übertragungsrate von 9.6 kBit/s, asynchroner Betrieb, XON/XOFF Fluss-Steuerung. Folgt man zur Realisierung dieser Bitratenadaption den CCITT-Empfehlungen, so erfolgt die Geschwindigkeitsanpassung in den beiden Bitratenadaptionsstufen RA1 und RA2 vorzugsweise nach CCITT-Empfehlung I.460 bzw. I.463 (V.110). Dies bedeutet, dass die Datenrate DR 9.6 kBit/s, die Netzrate NR 64 kBit/s und die Zwischenübertragungsrate ZUR 16 kBit/s beträgt.

In den Fig. 2 bis 8 wird die ganze Bitratenadaption anhand des Übergangs von der Netzrate NR des Fernmeldenetzes OF bzw. PF auf die Datenrate DR der Endgeräte über die beiden Bitratenadaptionsstufen RA2 und RA1 aufgezeigt.

Fig. 2 zeigt einen in seiner Länge theoretisch unbegrenzten Datenstrom DAS eines B-Kanales. Die relevanten Daten sind auf zwei Bit pro Byte BY begrenzt und im Datenstrom DAS von Fig. 2 durch unterschiedliche Schraffuren und durch die fortlaufende Normerierung der ersten Bytes speziell gekennzeichnet. Eine Recheneinheit entnimmt den entsprechenden Datenströmen DAS die Daten byteweise in der angegebenen Reihenfolge und legt diese in den Speicherplätzen BY0 bis BY15 bzw. BY16 bis BY31 in der gleichen Reihenfolge im lokalen Speicher der Recheneinheit ab, d.h. dass das Byte BY (N) des Datenstromes DAS im Speicherplatz BY0, das Byte BY (N+1) wird dem Speicherplatz BY1 zugewiesen, usw.

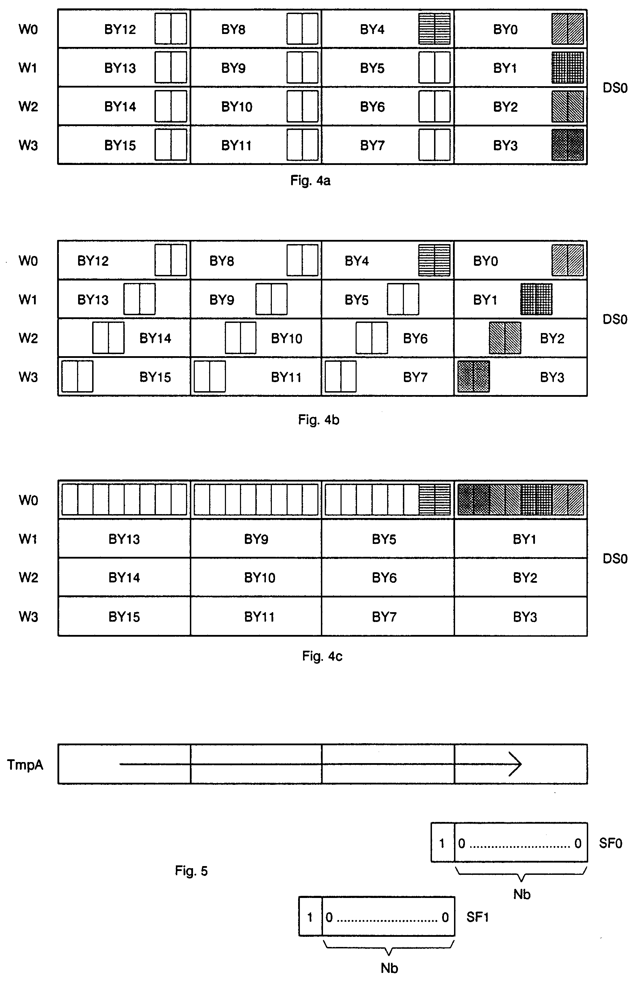

In Fig. 3 sind zwei im lokalen Speicher der Recheneinheit liegende Datensätze DS0 und DS1 dargestellt, wobei jeder Datensatz DS0 und DS1 dieses Ausführungsbeispieles aus vier Wörtern W0 bis W3 bzw. W4 bis W7 und jedes Wort W0 bis W7 aus vier Bytes besteht. Somit ergibt sich eine Wortlänge WL von 32 Bit. Die anfallenden Daten werden byteweise dem Datenstrom DAS (Fig. 2) entnommen und fortlaufend in den Datensätzen DS0 bzw. DS1 abgelegt. Ist einer der Datensätze DS0 bzw. DS1 vollständig mit neuen Daten beschrieben, so wird die Datenablage im anderen Datensatz DS1 bzw. DS0 fortgesetzt. In derjenigen Phase, in der ein Datensatz DS0 bzw. DS1 nicht beschrieben wird, läuft die Verarbeitung der Daten dieses Datensatzes DS0 bzw. DS1 ab. Auf diese Weise ist immer ein Datensatz DS0 bzw. DS1 in Bearbeitung, währenddem der andere mit neuen Daten beschrieben wird. Voraussetzung ist, dass ein Datensatz DS0 bzw. DS1 abschliessend bearbeitet werden kann, bevor der zweite wieder gefüllt ist. Die Ablagereihenfolge der einzelnen Bytes BY (Fig. 2) innerhalb eines Datensatzes DS0 bzw. DS1 erfolgt entsprechend der Nummerierung der Bytes BY0 bis BY15 bzw. BY16 bis BY31, d.h. die Bytes BY (Fig. 2) werden in einer Kolonne von oben nach unten und kolonnenweise von rechts nach links in die Datensätze DS0 bzw. DS1 abgelegt. Zur Verdeutlichung sind die in Fig. 2 speziell schraffierten relevanten Bit auch in die Fig. 3 übernommen worden.

Fig. 4 zeigt drei weitere Verarbeitungsschritte des vollständig mit neuen Daten gefüllten Datensatzes DS0, wie sie in der zweiten Bitratenadaptionsstufe RA2 vorgenommen werden. In einem ersten Schritt wird der Inhalt der Wörter W1 bis W3 wie folgt nach links verschoben: das Wort W1 wird um zwei Bitpositionen, das Wort W2 wird um vier Bitpositionen und das Wort W3 wird um sechs Bitpositionen nach links verschoben. Das Wort W0 bleibt unverändert. Fig. 4b zeigt die durch die Verschiebung aus der Ausgangslage in Fig. 4a entstehende treppenförmige Anordnung der relevanten Daten im Datensatz DS0. Kennzeichnend ist, dass sich die relevanten Daten in vertikaler Richtung nicht überlappen, was die Voraussetzung für den zweiten Schritt ist: In diesem werden alle relevanten Daten der vier Wörter W0 bis W3 im Wort W0 zusammengefasst (Fig. 4c). Mit der Übergabe des Wortes W0 in ein Datenwort TmpA - dem eigentlichen dritten Schritt - wird die Adaption in der zweiten Bitratenadaptionsstufe RA2 abgeschlossen und neue Daten können in den Datensatz DS0 abgespeichert werden. Anschliessend erfolgt die Verarbeitung des Datensatzes DS1 in gleicher Weise, währenddem in den Datensatz DS0 wiederum neue Daten abgelegt werden. Nach diesen Verfahrensschritten ist die Übertragungsrate um den Faktor vier verkleinert worden: die Netzrate NR von 64 kBit/s ist auf die Zwischenübertragungsrate ZUR von 16 kBit/s reduziert worden.
In diesem Ausführungsbeispiel wurde von einer Wortlänge WL von 32 Bit ausgegangen. Werden, wie hier, vier Worte W0 bis W3 für einen Datensatz DS0 bzw. DS1 gewählt, so wird mit dem beschriebenen Verfahren gerade ein Wort W0 mit relevanten zusammenhängende Daten erhalten. Denkbar ist aber auch eine andere Wortlänge WL wie zum Beispiel 16 oder 64 Bit. Will man, wie im vorliegenden Ausführungsbeispiel, die relevanten Daten zusammenhängend in einem Wort ablegen, so ergibt sich die allgemeine Regel, wonach die Anzahl Wörter pro Datensatz DS0 bzw. DS1 gleich gross sein muss wie die Anzahl Bytes in einem Wort.

Zur Synchronisation des Datenstromes DAS (Fig. 2) mit den Verarbeitungsschritten der ersten Bitratenadaption RA1, ist im Datenstrom DAS nach einem bestimmten Synchronisationsbitmuster Nb zu suchen. Bei der vorliegenden V.24-Implementation ist dies das Nullbyte, welches am Anfang und auch während dem Datentransfer in regelmässigen Abständen gesendet wird. Dieses Nullbyte muss zur Synchronisation eine bestimmte Position innerhalb des Datenwortes TmpA einnehmen. Im vorliegenden Ausführungsbeispiel ist die Synchronisation erreicht, wenn das niederwertigste Bit des Synchronisationsbitmusters Nb mit dem niederwertigsten Bit des Datenwortes TmpA in der Position übereinstimmt, d.h. wenn das Synchronisationsbitmuster Nb rechtsbündig im Datenwort TmpA zu liegen kommt. In Fig. 5 sind die zur Synchronisation notwendigen Schritte aufgezeigt: Der im Datenwort TmpA stehende Teil des in der zweiten Bitratenadaptionsstufe RA2 reduzierten Datenstromes DAS (Fig. 2) wird bei einer Wortlänge WL von 32 Bit und einer Synchronisationsbitmusterlänge von neun Bit vorzugsweise mit zwei stationären Suchfenstern SF0 und SF1, die mit dem jeweils gesuchten Bitmuster versehen sind, verglichen. Fällt der Vergleich mit beiden Suchfenstern SF0 und SF1 negativ aus, so wird das Datenwort TmpA um eine Position nach rechts verschoben. Anschliessend erfolgt wiederum ein Vergleich der im Datenwort TmpA stehenden Daten mit den in beiden stationären Suchfenstern SF0 und SF1 stehenden Daten. Stimmt der Inhalt des Suchfensters SF0 mit dem Inhalt des Datenwortes TmpA in der momentanen Position des Datenwortes TmpA überein, so ist der Anfang des relevanten Datenstromes erkannt und das Synchronisationsbitmuster Nb liegt rechtsbündig im Datenwort TmpA. Stimmt der Inhalt des Suchfensters SF1 mit dem Inhalt des Datenwortes TmpA in dieser Position überein, so muss das Datenwort TmpA im vorliegenden Ausführungsbeispiel um weitere acht Bitpositionen nach rechts verschoben werden, damit die Rechtsbündigkeit des Synchronisationsbitmusters Nb im Datenwort TmpA erfüllt ist. Neben diesen zur Synchronisation notwendigen Verfahrensschritten werden nichtrelevante Signale wie Ruhesignale, Breaksignale, etc. automatisch aus dem Datenstrom entfernt. Die nach der Synchronisation verbleibenden Daten beinhalten neben den Nutzdaten verschiedene Steuerdaten und zusätzliche Übertragungsdaten, wie sie in den Standards der CCITT-Normen vorgesehen sind.
Anstelle der zwei Suchfenster SF0 und SF1 kann auch nur ein Suchfenster SF0 verwendet werden. Es ist dann jedoch mit einer längeren Suchzeit zu rechnen, da im Durchschnitt mehr Vergleiche anzustellen sind, als bei mehreren örtlich verschobenen Suchfenstern SF0 und SF1. Auf der anderen Seite können aber auch zu viele örtlich verschobene Suchfenster für die Synchronisation eingesetzt werden. Wird die Anzahl der Suchfenster zu gross gewählt, so sinkt die Effizienz des Suchens, da einerseits die Anzahl der Vergleiche wieder ansteigt und andererseits ein grösserer Speicherbedarf für die Suchfenster benötigt wird.

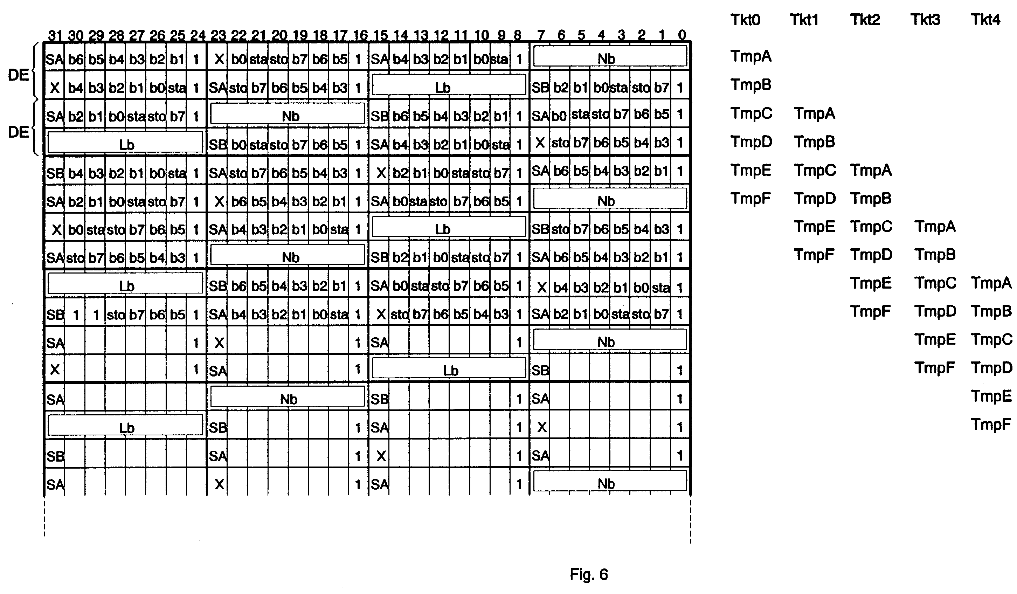

Fig. 6 zeigt den synchronisierten und in Dateneinheiten DE abgelegten Datenstom DAS vor der ersten Bitratenadaptionsstufe RA1 und mehrere bei der Verarbeitung in der ersten Bitratenadaptionsstufe RA1 verwendete Verarbeitungstakte Tkt0 bis Tkt4. Eine Dateneinheit DE ist beispielsweise aus zwei Datenworten TmpA und TmpB zusammengesetzt und wird in einem Verarbeitungstakt Tkt0 vollständig verarbeitet. Nach der Verarbeitung einer Dateneinheit DE werden die Datenworte TmpC und TmpD zu den neuen Datenworten TmpA und TmpB. Analog wird die Bezeichnung der restlichen Datenworte verschoben. Diese Umbenennung und Verschiebung ist in Fig. 6 für jeden der aufgeführten Verarbeitungstakte Tkt0 bis Tkt4 ersichtlich. Die in der Tabelle von Fig. 6 von der zweiten Bitratenadaptionsstufe RA2 stammenden Daten sind von rechts nach links in die von den Recheneinheiten RE1 bis RE3 vorgegebene Wortlänge WL von 32 Bit abgelegt. In der Tabelle sind die einzelnen Bit nach ihrer Funktion bezeichnet. Im Takt Tkt0 sind im Datenwort TmpA folgende Informationen vorhanden: Das Synchronisationsbitmuster Nb ist ein Nullbyte, in dem alle Bit auf Null gesetzt sind. Anschliessend folgt eine Eins, welche ebenfalls in das Suchfenster SF0 bzw. SF1 (Fig. 5) einbezogen werden kann. Mit einem Startbit sta wird der eigentliche Anfang von Nutzdaten b0 bis b7 angezeigt, die entsprechend dem Protokoll von V.24/V.28 durch weitere Steuerdaten wie SA, SB, X oder einer "1" unterbrochen werden. Nach dem letzten Bit der Nutzdaten b0 bis b7 wird als Abschluss jeweils ein Stopbit sto gesendet. Eine spezielle Informationseinheit bildet ein Leerbyte Lb, in dem weitere Steuerdaten codiert werden können. Dabei kann es sich zum Beispiel um die Codierung der Übertragungsgeschwindigkeit oder um andere im V.24/V.28-Standard vorgesehene Angaben handeln. Die beschriebenen Sequenzen ziehen sich nun über die ganze Tabelle von Fig. 6 hinweg und zeigen dabei eine regelmässige sich nach allen fünf Datenworten TmpA bis TmpE wiederholende Struktur des Datenstromes auf, die dazu verwendet werden kann, den Synchronisationszustand der Übertragung einfach zu überwachen. Erst wenn eine Überprüfung des Synchronisationszustandes negativ ausfällt, muss anhand des in Fig. 5 beschriebenen Verfahrens der Datenstrom neu synchronisiert werden.

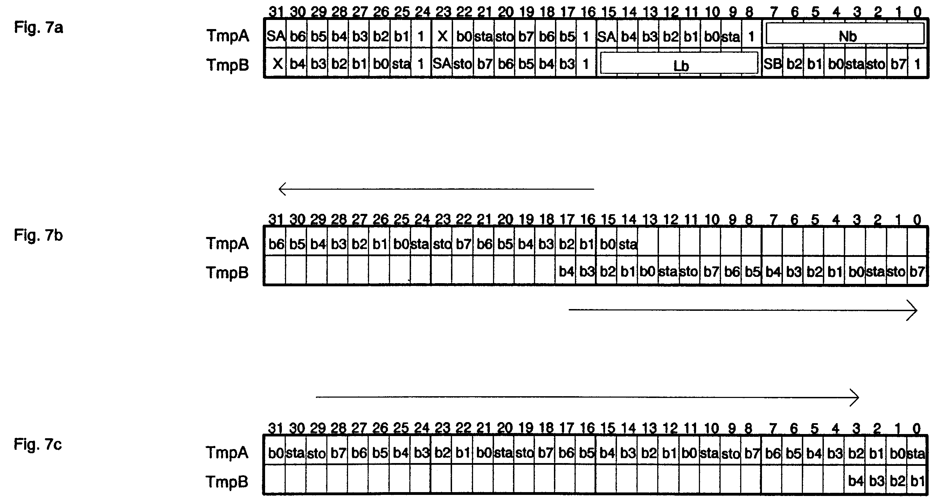

Fig. 7 zeigt eine Dateneinheit DE mit den beiden Datenworten TmpA und TmpB. Die Ausgangslage für drei aufeinander folgende und im gleichen Takt ablaufende Verarbeitungsschritte ist in Fig. 7a dargestellt. Darin ist der gleiche Dateninhalt für die Datenworte TmpA und TmpB wie in der Tabelle von Fig. 6 für Takt Tkt0 ersichtlich. In beiden Datenworten TmpA und TmpB werden nun alle Steuerdaten ausser den Start- und Stopbit sta bzw. sto entfernt. Die restlichen im Datenwort TmpA verbleibenden Daten werden linksbündig in die mit einem Pfeil oberhalb des Datenwortes TmpA vorgezeigte Richtung (Fig. 7b) verschoben, währenddem die restlichen im Datenwort TmpB verbleibenden Daten rechtsbündig in die mit einem Pfeil unterhalb des Datenwortes TmpB weisende Richtung (Fig. 7b) verschoben werden. Das Resultat dieser beschriebenen Ausführungen ist aus Fig. 7b ersichtlich. Dieses ist dann auch die Ausgangslage für die heute für die Recheneinheit zur Verfügung stehenden Mikroprozessoren und deren spezielle Funktionen zur Links- bzw. Rechts-Verschiebung eines zusammengehängten Doppelwortes. Damit lässt sich der Inhalt der Dateneinheit DE von Fig. 7b zusammenhängend so weit nach rechts verschieben, bis die Daten in ihrer neuen Form sowohl im Datenwort TmpA als auch im Datenwort TmpB wieder rechtsbündig stehen. Die Verschiebungsrichtung ist durch den Pfeil oberhalb der Fig. 7c angedeutet.
Anstelle der in den vorangegangenen Verfahrensschritten unter Ausnützung der speziellen Funktionen verwendeten modernen Mikroprozessoren, kann das Verschieben der Datenworte TmpA bzw. TmpB auch einzeln vorgenommen werden. Der Nachteil liegt dann vor allem im längeren und aufwendigeren Verfahrensablauf.

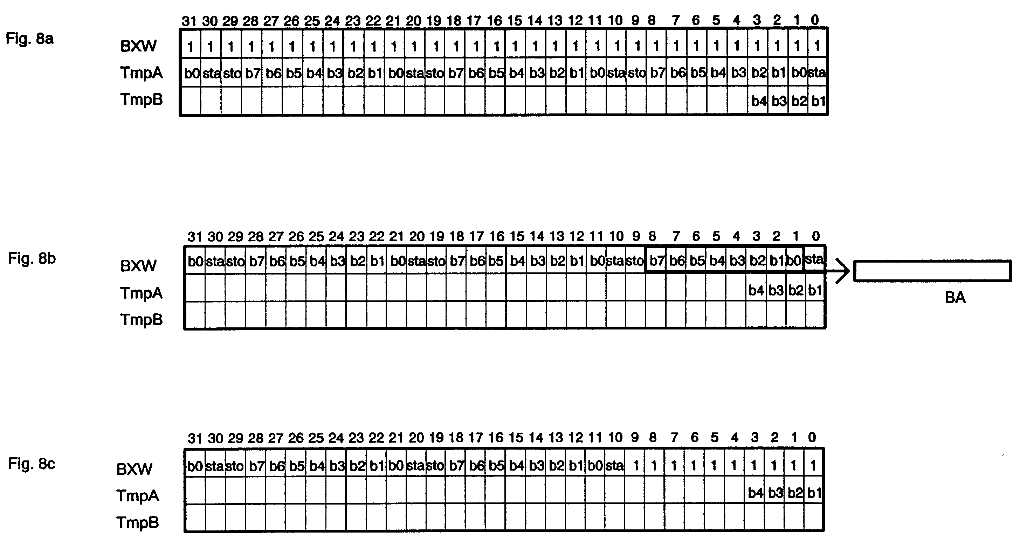

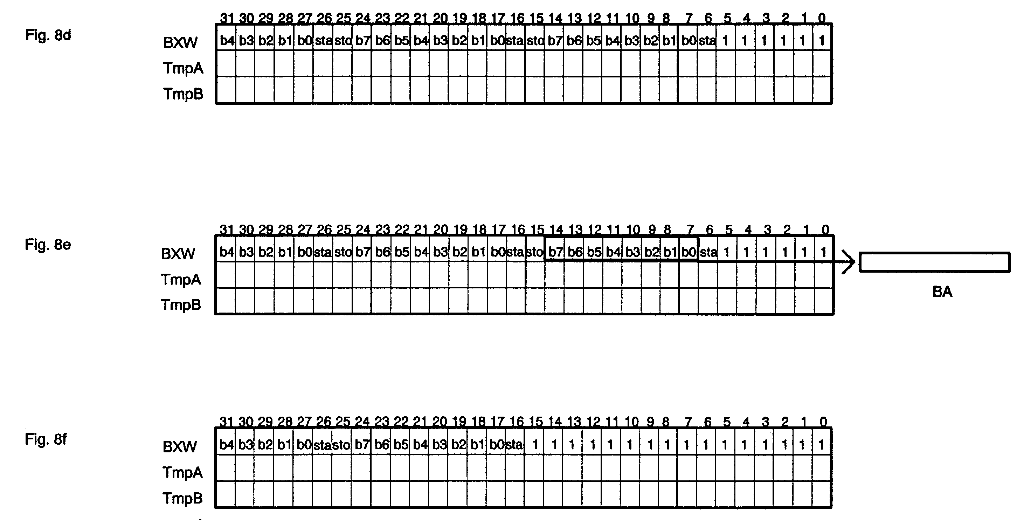

Fig. 8 zeigt die weiteren immer noch im gleichen Takt Tkt0 ablaufenden Verfahrensphasen, die als eigentliche Extraktionsphasen bezeichnet werden können. Die Nutzdaten b0 bis b7 werden nun aus dem aufbereiteten Datenstrom extrahiert. Zur Veranschaulichung dieses Vorganges wird ein zusätzliches Extraktionswort BXW oberhalb der Dateneinheit DE eingeführt. Das Extraktionswort BXW ist zu Beginn des Vorganges vollständig mit Einsen gefüllt, wie dies in Fig. 8a dargestellt ist. Durch die bereits beschriebene Rechts-Verschiebeoperation wird der Inhalt der Datenworte TmpA und TmpB rechtsbündig in das Extraktionswort BXW geschoben (Fig. 8b). Aus dem Extraktionswort BXW werden die Nutzdaten b0 bis b7 - schwarzer Rahmen von Fig. 8b - gelesen und über das Register BA weitergeleitet. Die im Extraktionswort BXW gelesenen Bitpositionen werden zusammen mit den entsprechenden Start- und Stopbit sta und sto mit Einsen überschrieben (siehe Fig. 8c). Sind weitere relevante Daten im Datenwort TmpA vorhanden, so werden diese so weit in das Extraktionswort BXW geschoben, bis das Datenwort TmpA keine relevanten Daten mehr enthält und bis im Extraktionswort BXW die Daten linksbündig anstehen (Fig. 8d). Nun wird in diesem Takt Tkt0 ein letztes Mal ein Byte Nutzdaten b0 bis b7 gelesen (Fig. 8e) und im Extraktionswort BXW wiederum durch Einsen ersetzt (Fig. 8f). Die Verarbeitung der momentanen Dateneinheit DE ist damit abgeschlossen und eine Neuzuweisung der Datenwortbezeichnung im nächsten Takt kann gemäss den Angaben von Fig. 6 vorgenommen werden.

Wie bereits erwähnt, erfolgt die Bitratenadaption gleichzeitig in beide Richtungen. Das anhand der Fig. 2 bis 8 erklärte Verfahren kann selbstverständlich auch in die andere Richtung angewendet werden, nämlich von der Datenrate DR zur Netzrate NR. Die entsprechenden Verfahrensschritte sind dabei lediglich in umgekehrter Reihenfolge anzuwenden mit der Vereinfachung, dass die anhand Fig. 5 beschriebenen Synchronisationsschritte nicht notwendig sind.

Die in den Datensätzen DS0 und DS1 (Fig. 3) des lokalen Speicher der Recheneinheit zu verarbeitenden Daten des Datenstromes DAS (Fig. 2) können auch zuerst in einen beispielsweise mit FIFO (First In First Out)- Speicher realisierten Zwischenspeicher abgelegt und erst in einem zweiten Schritt in den lokalen Speicher der Recheneinheiten übertragen werden. Mit der Zwischenspeicherung der Daten ist die beschriebene abwechslungsweise Bearbeitung der Datensätzen DS0 und DS1 (Fig. 3) nicht erforderlich. Insbesondere können beide Datensätze DS0 und DS1 miteinander verarbeitet werden. Schliesslich ermöglicht der Zwischenspeicher auch eine Reduktion der Anzahl der Datensätze DS0 und DS1 (Fig. 3) auf einen einzigen Datensatz DS0 bzw. DS1.

Sämtliche Wortlängen WL sind im vorliegenden Ausführungsbeispiel für alle Variablen und Speichereinheiten mit 32 Bit angegeben. Die gezeigten Verfahrenschritte könne ohne weiteres auch an beliebig gewählte Wortlängen WL angepasst werden.

Selbstverständlich beschränkt sich die Erfindung nicht auf die Anwendung unter momentan geltenden ISDN-Normierungen, sondern kann auch bei geänderten Leistungsmerkmalen von ISDN oder in anderen Netzen bei gleicher Aufgabenstellung verwendet werden.

## Patentansprüche

1. Verfahren zur Bitratenadaption eines Datenkanals, über den Steuer- und/oder Nutzdaten in einem Datenstrom (DAS) zwischen mindestens zwei Datensende- und Empfangseinrichtungen übertragen werden, **dadurch gekennzeichnet**, dass der Datenstrom (DAS) in mindestens einem durch die Wortlänge (WL) einer Recheneinheit vorgegebenen Datensatz (DS0, DS1) bzw. Dateneinheit (DE) aufgeteilt wird und dass die Nutzinformation aus dem Datensatz (DS0, DS1) bzw. aus der Dateneinheit (DE) zur Weiterverarbeitung extrahiert wird.

2. Verfahren nach Anspruch 1, **dadurch gekennzeichnet**, dass die Bitratenadaption nach der CCITT-Empfehlung V.110 erfolgt.

3. Verfahren nach Anspruch 1 oder 2, **dadurch gekennzeichnet**, dass die Bitratenadaption in mindestens einer Stufe (RA2, RA1) erfolgt.

4. Verfahren nach einem der Ansprüche 1 bis 3, **dadurch gekennzeichnet**, dass in den Steuerdaten vorgesehene periodisch wiederkehrende Synchronisationsbitmuster (Nb) zur Synchronisation und zur Erkennung des Anfangs von relevanten Daten im Datenstrom (DAS) verwendet werden und dass zu dieser Synchronisation der Recheneinheit mit dem Datenstrom (DAS) mindestens ein Suchfenster (SF0, SF1) vorgesehen ist.

5. Verfahren nach Anspruch 4, **dadurch gekennzeichnet**, dass eventuell vorkommende nicht relevante Daten im Datenstrom (DAS), wie zum Beispiel ein Ruhesignal, eliminiert werden.

6. Verfahren nach einem der Ansprüche 1 bis 5, **dadurch gekennzeichnet**, dass bei zwei- oder mehrstufiger Bitratenadaption (RA1, RA2) die letzte Stufe (RA2) mindestens einen Datensatz (DS0, DS1) enthält, dass der Datenstrom (DAS) fortlaufend in die Datensätze (DS0, DS1) abgelegt wird, dass bei mindestens zwei Datensätzen (DS0, DS1) diese nacheinander zur Ablage der Daten benützt werden, dass die Anzahl der Wörter (W0, ..., W3; W4, ..., W7) in einem Datensatz (DS0, DS1) der Anzahl Byte in einem Wort der Recheneinheit entspricht und dass die einzelnen Wörter (W0, ..., W3; W4, ..., W7) dieser Datensätze (DS0, DS1) gegeneinander verschoben und in einem Wort (W0; W1) oder einem anderen gleich grossen Register zusammengefasst werden.

7. Verfahren nach Anspruch 1 oder 2, **dadurch gekennzeichnet**, dass alle Funktionen, insbesondere die Überprüfung des Synchronisationszustandes zwischen Datenstrom (DAS) und Recheneinheit, während dem Ablauf der Bitratenadaption getestet werden.

8. Verfahren nach einem der Ansprüche 1 bis 7, **dadurch gekennzeichnet**, dass die Steuerdaten des Datenstromes (DAS) teilweise oder ganz eliminiert werden.

9. Verfahren nach einem der Ansprüche 6 bis 8, **dadurch gekennzeichnet**, dass eine Dateneinheit (DE) aus mindestens einem Datenwort (TmpA, ..., TmpF) besteht, dass der Inhalt der Dateneinheiten (DE) in einem Extraktionswort (BXW) zwischengespeichert wird.

10. Verfahren nach einem der Ansprüche 6 bis 9, **dadurch gekennzeichnet**, dass der Ablauf in Takten (Tkt0, Tkt1, ....) erfolgt und dass pro Takt mindestens eine Dateneinheit (DE) verarbeitet wird.

11. Verfahren nach einem der Ansprüche 1 bis 10, **dadurch gekennzeichnet**, dass mehrere Datenkanäle mit dem entsprechenden Datenstrom (DAS) in der gleichen Recheneinheit verarbeitet werden.

12. Verfahren nach einem der vorangehenden Ansprüche, **dadurch gekennzeichnet**, dass sowohl in Sende- als auch in Empfangsrichtung Daten übertragen werden.
